# EUROPEAN PATENT APPLICATION

(11) **EP 0 904 827 A1**
(43) Date of publication of application: **31.03.1999**
(21) Application number: 98307858.5
(22) Date of filing: 28.09.1998
(51) Int. Cl.: B01D 53/94, B01J 20/18

(54) **Catalyst-adsorbent for exhaust gas purification and method for exhaust gas purification**

(30) Priority: 30.09.1997 JP 265812/97
(71) Applicant: NGK INSULATORS, LTD., Nagoya City Aichi Pref. (JP)
(72) Inventor: Noda, Naomi, Aichi-prefecture 491-0931 (JP); Shibagaki, Yukinari, Konan-city, Aichi-prefecture 483-8277 (JP); Takahashi, Akira, Park City Ueda Riverview 1106, Nagoya-city, Aichi-prefecture 468-0054 (JP); Mizuno, Hiroshige, Tajimi-city, Gifu-prefecture 507-0804 (JP)
(74) Representative: Paget, Hugh Charles Edward

(57) **Abstract**

A catalyst-adsorbent for exhaust gas purification includes a monolithic carrier (3), an adsorbent layer (2) loaded thereon, comprising an adsorbent component having hydrocarbon adsorbability, and a catalyst layer (1) loaded on the adsorbent layer, comprising a catalyst component having the purifiability for the harmful substances contained in the exhaust gas emitted from an internal combustion engine. In the catalyst-adsorbent the thickness of the catalyst layer is 10 to 120 µm. The above catalyst-adsorbent has an excellent balance between the purifiability of catalyst layer and the HC adsorbability of adsorbent layer, and can effectively purify the harmful substances contained in the exhaust gas emitted from an internal combustion engine, particularly the hydrocarbons generated in a large amount during the cold start of the engine.

## Description

### Background of the Invention

### (1) Field of the Invention

The present invention relates to a catalyst-adsorbent for exhaust gas purification, capable of effectively purifying the harmful substances contained in the exhaust gas emitted from an internal combustion engine, particularly the hydrocarbons generated in a large amount during the cold start of the engine, as well as to a method for exhaust gas purification using the catalyst-adsorbent.

### (2) Description of Related Art

In order for a catalyst to exhibit its catalytic activity, the catalyst must be heated to a given temperature or higher. Therefore, during the cold start of automobile when the catalyst provided in the exhaust gas system is not heated sufficiently, the harmful components of exhaust gas are discharged into air without being purified. While regulations on the harmful components present in exhaust gases, particularly HC are becoming increasingly strict, HC is generated in a large amount during the cold start. Hence, it is an important technical task to control the discharge of HC into air during the cold start.

As a means for controlling the discharge of HC into air during the cold start, there were developed so-called catalyst-adsorbents comprising:
a monolithic carrier,
an adsorbent component (e.g. a zeolite) having HC adsorbability, and
a catalyst component having the purifiability for the harmful components contained in the exhaust gas emitted from an internal combustion engine,
wherein the adsorbent component and the catalyst component are loaded in close vicinity to each other on the monolithic carrier.

In these catalyst-adsorbents, it is aimed that the HC in exhaust gas is temporarily adsorbed by the adsorbent component up to the moment at which the catalyst component is heated and, as the engine is warmed up, the HC adsorbed by the adsorbent component is desorbed and is purified by the catalyst component which has been activated by the engine warm-up.

As the way in which the catalyst component and the adsorbent component are arranged in the above catalyst-adsorbent, various approaches are considered. In a preferable approach, a layer comprising an adsorbent component, i.e. an adsorbent layer is first loaded on a monolithic carrier, as an inner layer; and then a layer comprising a catalyst component, i.e. a catalyst layer is loaded on the adsorbent layer, as a surface layer. This arrangement is desirable because all the HC desorbed from the adsorbent layer can be allowed to contact with the catalyst layer and a high purification efficiency is obtained. Also, loading of the catalyst component and the adsorbent component in respective layers can provide high durability as compared with when the two components are loaded in a mixed state.

Japanese Patent Application Kokai (Laid-Open) No. 10566/1996 discloses, as an example of the catalyst-adsorbent of high durability and high low-temperature light-off property, a catalyst-adsorbent of layered structure comprising a monolithic carrier, a first coating layer comprising an adsorbent component, i.e. an adsorbent layer, loaded on the carrier, and a second coating layer comprising a catalyst component, i.e. a catalyst layer, loaded on the adsorbent layer.

A study by the present inventors revealed that in the above catalyst-adsorbent of layered structure, the thickness of the catalyst layer (the surface layer) greatly affects the HC purifiability of the whole catalyst-adsorbent.

That is, when the thickness of the catalyst layer (the surface layer) is too large, the catalyst layer has high purifiability; however, this high thickness makes difficult the sufficient diffusion of HC into the adsorbent layer (the inner layer) and consequently the proportion of adsorbed HC is small. Meanwhile, when the thickness of the catalyst layer is too small, HC can easily diffuse into the adsorbent layer and consequently the proportion of adsorbed HC is large; however, the HC desorbed from the adsorbed layer with its temperature rise caused by exhaust gas contacts with the catalyst layer in too short a time and the purification of the desorbed HC by the catalyst layer becomes insufficient.

Thus, the thickness of the catalyst layer is an important factor in determining the performance of the catalyst-adsorbent. In conventional catalyst-adsorbents of layered structure, however, it was not conducted to specify the thickness of the catalyst layer to obtain an appropriate balance between the purifiability of catalyst layer and the HC adsorbability of adsorbent layer. No study was made on the thickness of the catalyst layer per se, either in Japanese Patent Application Kokai (Laid-Open) No. 10566/1996, although the literature mentions on the total thickness of the catalyst layer and the adsorbent layer.

### Summary of the Invention

Under the above situation, the present invention has been completed with a view to optimizing the thickness of the catalyst layer to obtain an appropriate balance between the purifiability of catalyst layer and the HC adsorbability of adsorbent layer and thereby increasing the HC purifiability of the whole catalyst-adsorbent.

According to the present invention, there is provided a catalyst-adsorbent for exhaust gas purification comprising:
a monolithic carrier,
an adsorbent layer loaded thereon, comprising an adsorbent component having hydrocarbon adsorbability, and
a catalyst layer loaded on the adsorbent layer, comprising a catalyst component having the purifiability for the harmful substances contained in the exhaust gas emitted from an internal combustion engine,
in which catalyst-adsorbent the thickness of the catalyst layer is 10 to 120 µm.

According to the present invention, there is also provided a method for exhaust gas purification, which comprises disposing the above catalyst-adsorbent in an exhaust gas pipe of internal combustion engine and, for a certain period of the cold start of the engine, introducing an oxidizing gas into the exhaust gas emitted from the engine, at a position of the pipe upstream of the catalyst-adsorbent or controlling the amounts of air for combustion and fuel fed into the engine so that the oxygen amount in exhaust gas increases.

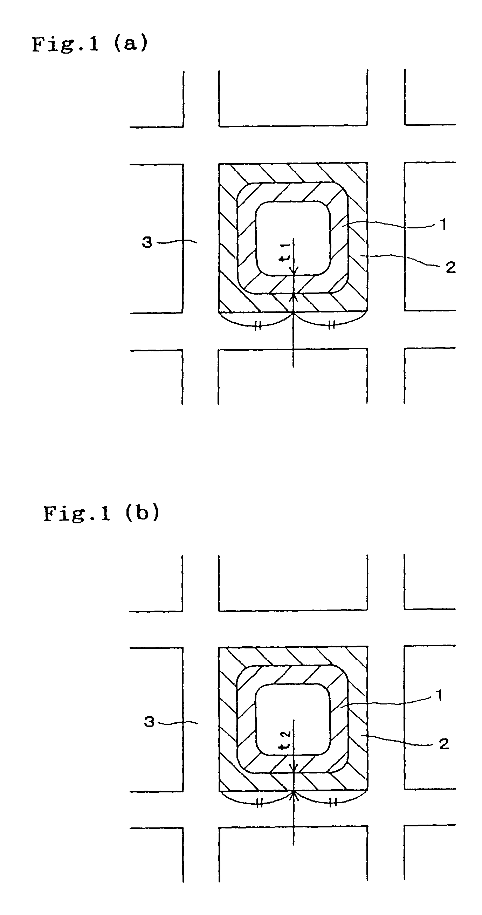

In the present specification, "the thickness of catalyst layer" refers to t1 of Fig. 1(a) which is the average thickness of a catalyst layer 1 formed on an adsorbent layer 2 formed on the cell wall of a monolithic carrier 3, measured at about the center of the cell wall; and "the thickness of adsorbent layer" refers to t2 of Fig. 1(b) which is the average thickness of an adsorbent layer 2 formed on the cell wall of a monolithic carrier 3, measured at about the center of the cell wall.

### Brief Description of the Drawings

Fig. 1(a) is an enlarged fragmentary sectional view of the catalyst-adsorbent of the present invention, showing the thickness of the catalyst layer. Fig. 1(b) is an enlarged fragmentary sectional view of the catalyst-adsorbent of the present invention, showing the thickness of the adsorbent layer.

Fig. 2 is a graph showing the results of Example.

### Detailed Description of the Preferred Embodiment

The catalyst-adsorbent for exhaust gas purification according to the present invention comprises as shown in Fig. 1(a):
a monolithic carrier 3,
an adsorbent layer 2 loaded thereon, comprising an adsorbent component having hydrocarbon adsorbability, and
a catalyst layer 1 loaded on the adsorbent layer 2, comprising a catalyst component having the purifiability for the harmful substances contained in the exhaust gas emitted from an internal combustion engine,
and has a layered structure. The catalyst-adsorbent is characterized in that the thickness t1 of the catalyst layer 1 is 10 to 120 µm, preferably 15 to 90 µm, more preferably 15 to 50 µm.

By allowing the catalyst layer 1 loaded as a surface layer to have a thickness tl specified as above, the present catalyst-adsorbent can have an excellent balance between the HC adsorbability of the adsorbent layer 2 as inner layer and the purifiability of the catalyst layer 1 for the HC desorbed from the adsorbent layer 2, and can effectively purify the unburnt HC emitted from an internal combustion engine in a large amount during the cold start.

When the thickness t1 of the catalyst layer 1 is smaller than 10 µm, the hindrance of the catalyst layer 1 for HC diffusion is small and the proportion of HC adsorbed by the adsorbent layer 2 is high; however, the contact time between (1) the HC desorbed from the adsorbent layer 2 with the warm-up of engine and (2) the catalyst layer 1 is short and the purification of desorbed HC by the catalyst layer 1 is insufficient. Since the catalyst layer is ordinarily constituted by a noble metal and a heat-resistant inorganic oxide for loading the noble metal in a dispersed state, as mentioned later, if the thickness of catalyst layer is too small, the amount of heat-resistant inorganic oxide is too small relative to the required amount of noble metal; as a result, the high dispersion of noble metal in heat-resistant inorganic oxide is impossible and the noble metal tends to cause sintering, resulting in reduced durability. Meanwhile, when the thickness tl of the catalyst layer 1 is larger than 120 µm, the hindrance of the catalyst layer 1 for HC diffusion is large and the proportion of HC adsorbed by the adsorbent layer (the inner layer) 2 is low.

In the present invention, the sum of the thickness t1 of the catalyst layer and the thickness t2 of the adsorbent layer is preferably 15 to 350 µm. When the sum is smaller than 15 µm, the two layers show no sufficient effect as a whole; when the sum is larger than 350 µm, there is a problem of an increase in pressure loss.

The monolithic carrier used in the catalyst-adsorbent of the present invention refers to a structure having passages (cells) surrounded by substantially uniform partition walls (ribs), which is generally called a honeycomb structure. As the material for the monolithic carrier, there are suitably used ceramic materials made of cordierite, mullite or the like; foil-shaped metallic materials made of a heat-resistant stainless steel (e.g. Fe-Cr-Al alloy); and metallic materials molded into a honeycomb structure by powder metallurgy. The monolithic carrier preferably has a cell density of 6 to 1,500 cells/in.² (cpi²) (0.9 to 233 cells/cm²) and a partition wall thickness of 50 to 2,000 µm.

The passage (cell) of the monolithic carrier (honeycomb structure) may have any shape such as a polygon (for example, a square, a hexagon, and a triangle), a corrugation, or the like. Its external form can be formed to be a predetermined shape suitable for an internal form of the exhaust gas system where the exhaust gas is exhausted.

The adsorbent layer loaded on the monolithic carrier comprises an adsorbent component having HC adsorbability. The adsorbent component includes zeolite, active carbon, etc. The adsorbent component must have a heat resistance of at least 500°C for use in an exhaust gas system, and is preferably composed mainly of a zeolite.

The zeolite may be any of a natural product or a synthetic product, and has no particular restriction as to the kind. However, a zeolite having a Si/Al molar ratio of 40 or more and, when the hydrophobicity is also taken into account, of 100 or more is preferably used in view of the heat resistance and durability. Specific examples of such a zeolite are preferably ZSM-5, USY, β-zeolite, silicalite and a metallosilicate.

The zeolite can be used in one kind or in a combination of two or more kinds. For example, ZSM-5 having relatively small pores of about 0.55 nm in diameter is advantageous for adsorption of small molecules (e.g. propene) but disadvantageous for adsorption of large molecules (e.g. toluene and xylene). Meanwhile, USY having relatively large pores of about 0.74 nm in diameter is disadvantageous for adsorption of small molecules (e.g. propene) but advantageous for adsorption of large molecules (e.g. toluene and xylene).

Therefore, loading of a mixture of ZSM-5 and USY on a monolithic carrier is a preferred method of using the zeolite. Alternatively, ZSM-5 and USY may be loaded on a monolithic carrier apart in the flow direction of exhaust gas; in this case, ZSM-5 is preferably loaded on the upstream side of the carrier because ZSM-5 can adsorb and store HC even at higher temperatures as compared with USY.

β-Zeolite is most preferred because it has bimodal pores of about 0.55 nm and about 0.70 nm in diameter and can adsorb both small molecules and large molecules relatively well and, moreover, can adsorb a relatively large amount per unit volume.

While the zeolite can be used as an adsorbent component as it is, it is preferred to load, on the zeolite, at least one noble metal selected from Pt, Pd and Rh because the noble metal loaded on zeolite can suppress the coking of HC appearing simultaneously with adsorption of HC by zeolite. Loading of nobel metal on zeolite allows for regeneration of zeolite without reduction in its adsorptivity for HC. The noble metal loaded on zeolite is preferably Pd because Pd is most inexpensive and has high regeneratability for zeolite.

The loading of noble metal on zeolite is preferably conducted by an ion exchange method in view of the thermal stability. The amount of noble metal loaded on zeolite is preferably 5 to 150 g per ft³ of monolithic carrier, in view of the cost and the regeneratability for zeolite. When a zeolite is loaded on a monolithic carrier, the zeolite may contain, as necessary, 5 to 20% by weight of an inorganic binder (e.g. Al₂O₃ or SiO₂), whereby the zeolite can be loaded on the monolithic carrier strongly without impairing the adsorptivity for HC.

It is also preferred to allow the zeolite to contain at least one of the ions of Cu, Ag and Au (the group IB elements of periodic table) because the zeolite can have improved HC adsorbability thereby. In that case, since a lower content of the ion results in lower improvement in HC adsorbability, the content of the ion in the zeolite is preferably 20% or more based on the Al atoms of zeolite, more preferably 40% or more. The ion may be contained in the zeolite in combination with the noble metal mentioned above.

It is desirable for the improved heat resistance of the zeolite to allow the zeolite to also contain, in addition to the ion of the IB group element, at least one ion selected from the ions of Mg, Ca, Sr, Ba, Y, La, Ti, Ce, Mn, Fe, Cr, Ni and Zn, preferably at least one ion selected from the ions of Mg, Ca, Fe and Cr.

The catalyst layer loaded on the adsorbent layer comprises a catalyst component having the purifiability for the harmful substances contained in the exhaust gas emitted from an internal combustion engine. The catalyst component preferably comprises at least one noble metal selected from Pt, Pd and Rh and a heat-resistant inorganic oxide for loading the noble metal thereon in a dispersed state.

Desirably, the catalyst component comprises at least Pd as the noble metal. Pd has high oxidizability for HC and exhibits a catalytic activity even at relatively low temperatures. Use of Pd in catalyst component can give a catalyst layer having excellent low-temperature light-off property. The total amount of noble metal(s) in catalyst layer is preferably 10 to 250 g per ft³ of monolithic carrier (3.5x10⁻⁴ to 8.83x10⁻³ g per cc of monolithic carrier).

As the heat-resistant inorganic oxide for loading the noble metal thereon, there can be mentioned Al₂O₃, SiO₂, TiO₂, ZrO₂, compound oxides thereof, etc. Use of, in particular, Al₂O₃ having a specific surface area of 100 m²/g or more is preferred because the noble metal can be loaded thereon in a highly dispersed state and improvements in low-temperature light-off property and heat resistance are obtained.

The catalyst layer may further contain at least one metal selected from Ba, Cs and Zr, because the metal can improve the low-temperature light-off property of the catalyst layer. The catalyst layer may furthermore contain a rare earth element oxide having oxygen storage capacity (OSC), such as CeO₂, La₂O₃, a compound oxide of CeO₂ and ZrO₂, or the like, because the rare earth element oxide can improve the activity of catalyst layer in steady-state operation. The amount of the rare earth element oxide added is preferably about 2 to 30% by weight based on the amount of the heat-resistant inorganic oxide.

With respect to the formation of the catalyst layer on the adsorbent layer, impregnation method and predoping method are known. The impregnation method comprises first applying a heat-resistant inorganic oxide on the adsorbent layer loaded on the monolithic carrier and dipping the resulting material in a noble metal solution to adhere the noble metal onto the heat-resistant inorganic oxide. Meanwhile, the predoping method comprises first dipping a heat-resistant inorganic oxide in a noble metal solution, firing the resulting heat-resistant inorganic oxide to obtain a noble metal-loaded heat-resistant inorganic oxide, and loading it on the adsorbent layer loaded on the monolithic carrier.

When the two methods are compared, in the impregnation method, the noble metal is present in a large amount in the surface portion of the catalyst layer but the amount is smaller in the deeper portion of the catalyst layer. Meanwhile in the predoping method, the noble metal concentration in the catalyst layer is uniform and a sufficient amount of the noble metal can be contained not only in the surface portion but also in the inner portion. Therefore, in the catalyst-adsorbent of the present invention, it is preferred to form the catalyst layer by the predoping method.

Next, description is made on the method for exhaust gas purification using the present catalyst-adsorbent. In conducting exhaust gas purification by disposing the catalyst-adsorbent of the present invention in the exhaust gas pipe of internal combustion engine, when, for a certain period during the cold start, an oxidizing gas (e.g. secondary air) is introduced into the exhaust gas at a position upstream of the catalyst-adsorbent in the flow direction of exhaust gas, or when the ratio of the amount of air for combustion and the amount of fuel is changed so that the oxygen amount in exhaust gas increases, the combustion reaction on catalyst can be promoted and the earlier light-off of catalyst can be achieved.

The above introduction of oxidizing gas or the above change of the ratio of the amount of air for combustion and the amount of fuel for increased oxygen supply is preferred because as the HC adsorbed on the adsorbent layer begins to be desorbed with the temperature rise of the adsorbent layer caused by the heat of exhaust gas, the HC concentration in exhaust gas increases and the oxygen required for purification (combustion) of HC becomes short.

The catalyst-adsorbent of the present invention may be used by itself, or may be used in combination with other catalyst, other adsorbent and/or other catalyst-adsorbent. Particularly when more reliable purification of desorbed HC is aimed, it is preferred to dispose a catalyst downstream (in the flow direction of exhaust gas) of the present catalyst-adsorbent. In that case, the catalyst-adsorbent may have a blowing-through hole extending in the flow direction of exhaust gas and having a diameter larger than that of each passage (cell) of the monolithic carrier. By allowing the catalyst-adsorbent to have such a blowing-through hole and allowing part of the exhaust gas to pass through the blowing-through hole, the warm-up of the catalyst provided downstream of the catalyst-adsorbent can be promoted and the purification efficiency of desorbed HC by the catalyst is improved.

The present invention is described in detail below by way of Example. However, the present invention is in no way restricted to the Example.

### [Production of catalyst-adsorbents]

A commercial γ-Al₂O₃ (BET specific surface area: 200 m²/g) was impregnated with an aqueous cerium nitrate solution so that the amount of the solution impregnated became 6% by weight in terms of CeO₂. The impregnation product was calcinated at 600°C for 3 hours to obtain a compound oxide of Al₂O₃.CeO₂. The compound oxide was pulverized by a wet method. Thereto were added 20% by weight, based on γ-Al₂O₃, of a CeO₂ powder. Further, an aqueous palladium nitrate solution and acetic acid were added. The resulting mixture was pulverized for 15 hours using a ball mill, to obtain a slurry. The slurry was dried at 100°C for 15 hours and fired at 550°C for 3 hours to obtain a Pd-loaded Al₂O₃.CeO₂ powder. This powder was used as a catalyst component. A commercial zeolite powder (H type ZSM-5, Si/Al = 120) was used as an adsorbent component.

To each of the Pd-loaded Al₂O₃.CeO₂ powder and the zeolite powder were added water and acetic acid. To the zeolite powder was further added an alumina sol having a solid alumina content of 2.5% by weight. Each of the resulting mixtures was pulverized for 15 hours using a ball mill, to produce a slurry for catalyst layer and a slurry for adsorbent layer.

A monolithic carrier, which was a cordierite honeycomb produced by NGK Insulators, Ltd., having an outer diameter of 1 in., a length of 2 in., a partition wall thickness of 12 mil and a cell density of 300 cpi², was first dipped in the slurry for adsorbent layer so that the loaded amount became 0.15 g per cc of the monolithic carrier. The resulting material was dried at 100°C for 1 hour and fired at 550°C for 1 hour to form an adsorbent layer on the carrier.

Subsequently, the adsorbent layer-loaded carrier was dipped in the slurry for catalyst layer to load the slurry so that the thickness of catalyst layer became as shown in Table 1. The resulting material was subjected to the same drying and firing steps as mentioned above, to obtain catalyst-adsorbent sample Nos. 1 to 6 wherein a catalyst layer of different thickness was formed on the adsorbent layer. Incidentally, at the time of production of the Pd-loaded Al₂O₃.CeO₂ powder, the amount of the aqueous palladium nitrate solution added was varied (actually, the Pd-loaded Al₂O₃.CeO₂ powder was produced in six kinds) so that the Pd amount loaded on the monolithic carrier became 100 g per ft³ of the carrier (3.53x10⁻³ g per cc of the carrier) in each sample independently of the thickness of the catalyst layer.

### [Performance evaluation of catalyst-adsorbents]

The catalyst-adsorbent samples were examined for long-term life (durability). That is, each sample was subjected to aging for total 100 hours by using an exhaust gas of 750°C emitted from a commercial engine and by employing a fuel-cut mode which comprised operating the engine at an A/F ratio of 14.4 (the vicinity of equivalent point) for 60 seconds and then cutting the fuel supply for 5 seconds to shift the A/F ratio to a fuel-lean side.

Each of the resulting samples was measured for HC light-off performance, HC adsorbability and purifiability for desorbed HC, using synthetic exhaust gases each simulating the exhaust gases emitted from commercial engines. HC light-off performance was determined by introducing, into each sample, a synthetic exhaust gas having a composition of λ = 1.0 close to stoichiometric point, measuring a temperature when the conversion of the HC contained in the exhaust gas became 50%, and expressing the temperature as light-off temperature of HC [T50% (°C)]. The results are shown in Table 1.

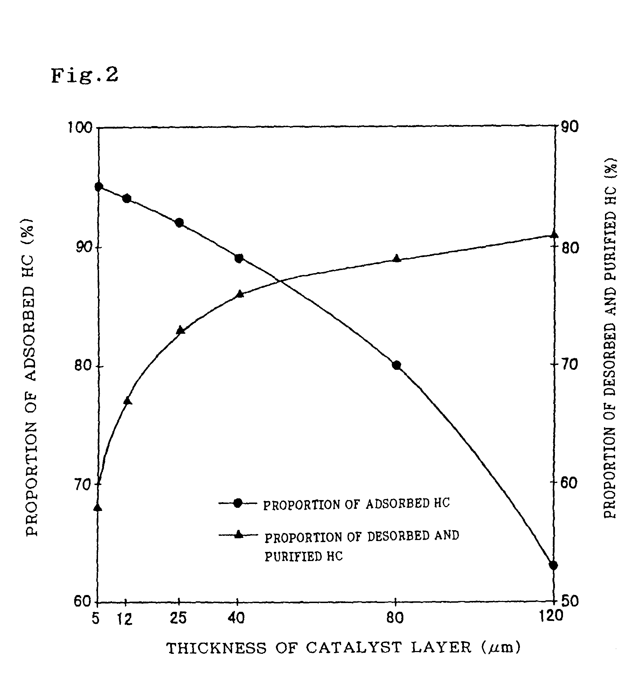

HC adsorbability was determined by introducing a synthetic exhaust gas having a composition of λ = 0.96, simulating the engine exhaust gas emitted during the cold start, into each sample at 40°C, measuring (amount of adsorbed HC/amount of introduced HC)x100, and expressing the value as proportion (%) of adsorbed HC in transient period. The results are shown in Table 1 and Fig. 2. Purifiability of desorbed HC was determined by continuing the introduction of the above synthetic exhaust gas for a further 300 seconds to allow the adsorbent layer of each sample to adsorb HC up to a saturation point (the saturation point is the same in all the samples because it is determined by the amount of zeolite and not by the thickness of catalyst layer), then switching the synthetic exhaust gas to (N₂ + O₂), heating the exhaust gas temperature at a rate of 50°C/min, measuring the discharge amount of HC, and calculating the proportion (%) of desorbed and purified HC from the discharge amount of HC. The results are shown in Table 1 and Fig. 2. Incidentally, the compositions and space velocities of the synthetic exhaust gases used are shown in Table 2.

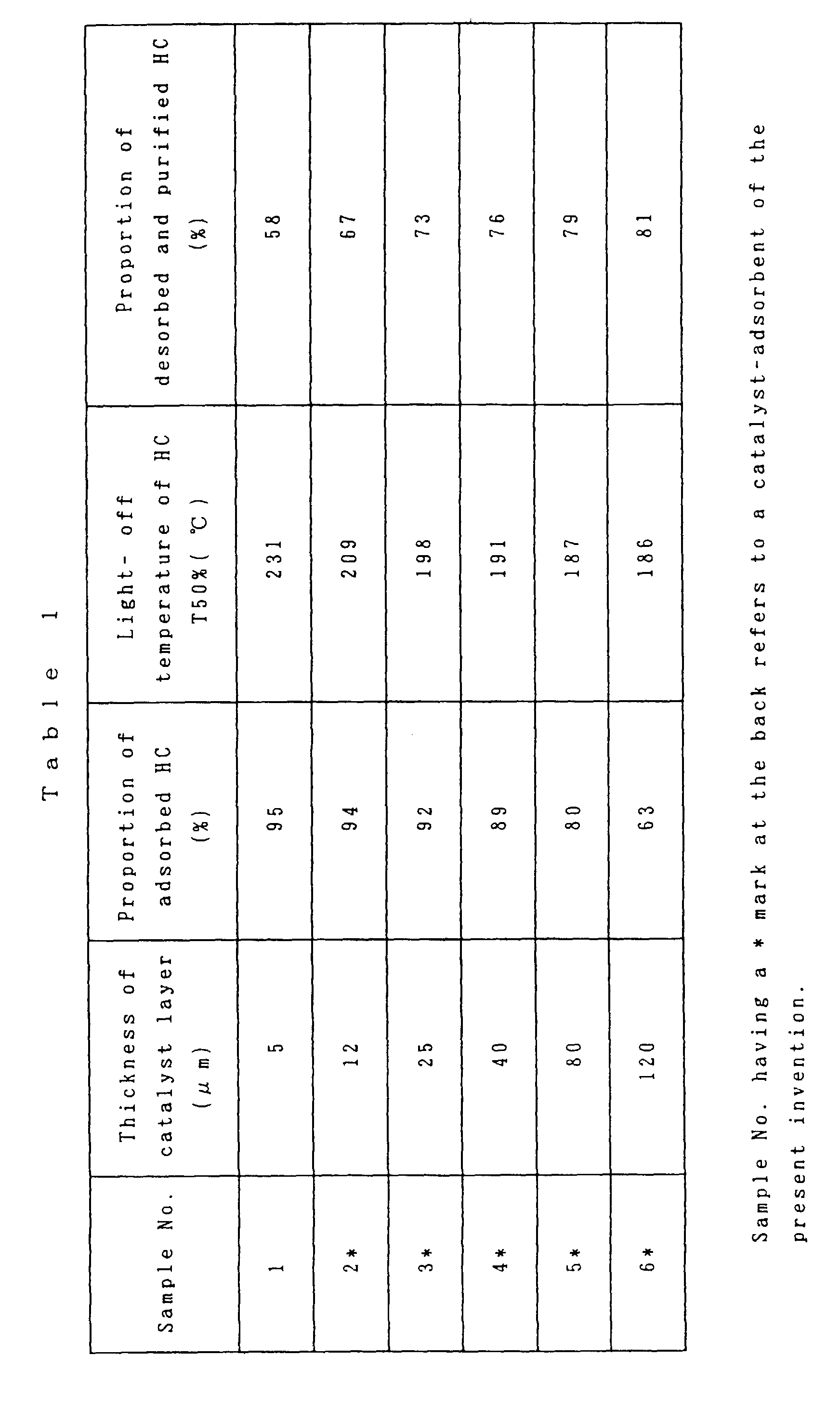

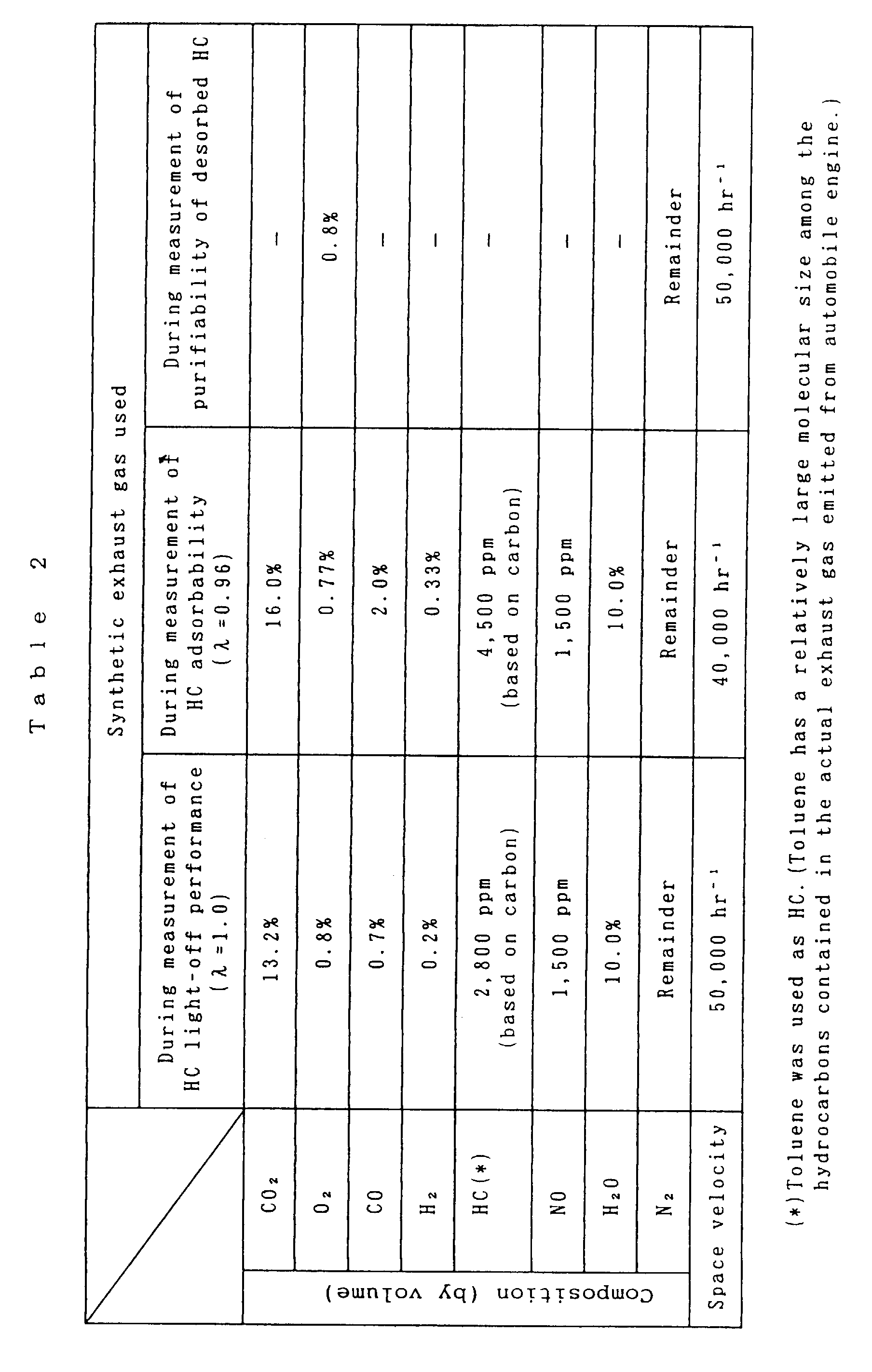

As seen in Table 1 and Fig. 2, as the thickness of catalyst layer was larger, hindrance of HC diffusion was higher and the proportion of adsorbed HC was lower. As the thickness of catalyst layer was smaller, the contact time between HC (desorbed from adsorbent layer and passing through catalyst layer) and catalyst layer was shorter, the HC light-off temperature of catalyst layer was higher, and the proportion of desorbed and purified HC was lower.

In the sample Nos. 2 to 6 wherein the thickness of catalyst layer was within the range specified by the present invention, as compared with the case of the sample No. 1 wherein the thickness of catalyst layer was outside the above range, the balance between the proportion of adsorbed HC and the proportion of desorbed and purified HC was good. Therefore, it is presumed that the sample Nos. 2 to 6 can efficiently adsorb, in the adsorbent layer, the unburnt HC emitted during the cold start of engine, without the significant hindrance of HC diffusion by the catalyst layer and that as the HC desorption from adsorbent layer takes place with the warm-up of engine, the desorbed HC can be effectively purified by the catalyst layer because the durable catalyst layer is activated even at a relatively low temperature and because the contact time between desorbed HC and catalyst layer is sufficiently long.

As described above, the catalyst-adsorbent of the present invention has an excellent balance between the purifiability of catalyst layer and the HC adsorbability of adsorbent layer, and can effectively purify the harmful substances contained in the exhaust gas emitted from an internal combustion engine, particularly the hydrocarbons generated in a large amount during the cold start of the engine.

## Claims

1. A catalyst-adsorbent for exhaust gas purification comprising:
a monolithic carrier,
an adsorbent layer loaded thereon, comprising an adsorbent component having hydrocarbon adsorbability, and
a catalyst layer loaded on the adsorbent layer, comprising a catalyst component having the purifiability for the harmful substances contained in the exhaust gas emitted from an internal combustion engine,
in which catalyst-adsorbent the thickness of the catalyst layer is 10 to 120 µm.

2. A catalyst-adsorbent for exhaust gas purification according to Claim 1, wherein the sum of the thickness of the catalyst layer and the thickness of the adsorbent layer is 15 to 350 µm.

3. A catalyst-adsorbent for exhaust gas purification according to Claim 1, wherein the adsorbent component is composed mainly of a zeolite.

4. A catalyst-adsorbent for exhaust gas purification according to Claim 3, wherein the zeolite has a Si/Al molar ratio of 40 or more.

5. A catalyst-adsorbent for exhaust gas purification according to Claim 3, wherein the zeolite contains at least one noble metal selected from Pt, Pd and Rh.

6. A catalyst-adsorbent for exhaust gas purification according to Claim 3, wherein the zeolite contains at least one ion selected from the ions of IB group elements of periodic table, that is, Cu, Ag and Au.

7. A catalyst-adsorbent for exhaust gas purification according to Claim 6, wherein the content of ion of IB group element in zeolite is 20% by weight or more based on the Al atoms in zeolite.

8. A catalyst-adsorbent for exhaust gas purification according to Claim 6, wherein the zeolite further contains at least one ion selected from the ions of Mg, Ca, Sr, Ba, Y, La, Ti, Ce, Mn, Fe, Cr, Ni and Zn.

9. A catalyst-adsorbent for exhaust gas purification according to Claim 1, wherein the catalyst component comprises a heat-resistant inorganic oxide and at least one noble metal selected from Pt, Pd and Rh, loaded on the heat-resistant inorganic oxide in a dispersed state.

10. A catalyst-adsorbent for exhaust gas purification according to Claim 9, wherein the catalyst component comprises at least Pd as the noble metal.

11. A catalyst-adsorbent for exhaust gas purification according to Claim 9, wherein the total amount of noble metal(s) in catalyst layer is 10 to 250 g per ft³ of monolithic carrier (3.5x10⁻⁴ to 8.83x10⁻³ g per cc of monolithic carrier).

12. A catalyst-adsorbent for exhaust gas purification according to Claim 9, wherein the heat-resistant inorganic oxide in catalyst component is Al₂O₃.

13. A catalyst-adsorbent for exhaust gas purification according to Claim 1, wherein the catalyst layer further comprises a rare earth element oxide.

14. A catalyst-adsorbent for exhaust gas purification according to Claim 1, wherein the catalyst layer further comprises at least one element selected from Ba, Cs and Zr.

15. A catalyst-adsorbent for exhaust gas purification according to Claim 1, wherein the catalyst layer is formed by dipping a heat-resistant inorganic oxide in a noble metal solution, firing the resulting material to obtain a noble metal-loaded heat-resistant inorganic oxide as a catalyst component, and loading the catalyst component on said adsorbent layer.

16. A method for exhaust gas purification, which comprises disposing a catalyst-adsorbent of Claim 1 in an exhaust gas pipe of internal combustion engine and, for a certain period of the cold start of the engine, introducing an oxidizing gas into the exhaust gas emitted from the engine, at a position of the pipe upstream of the catalyst-adsorbent or controlling the amounts of air for combustion and fuel fed into the engine so that the oxygen amount in exhaust gas increases.
